(19) **Europäisches Patentamt / European Patent Office / Office européen des brevets**

(11) **EP 2 019 281 B1**

(12) **EUROPÄISCHE PATENTSCHRIFT**

(45) Veröffentlichungstag und Bekanntmachung des Hinweises auf die Patenterteilung:
**09.09.2009 Patentblatt 2009/37**

(51) Int Cl.:
***G01B 11/25*** *(2006.01)*

(21) Anmeldenummer: 07014297.1

(22) Anmeldetag: **20.07.2007**

(54) **Verfahren zum Betrieb eines 3D-Sensors**

Method for operating a 3D sensor

Procédé destiné au fonctionnement d'un capteur en 3D

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**28.01.2009 Patentblatt 2009/05**

(73) Patentinhaber: **SICK AG
79183 Waldkirch (DE)**

(72) Erfinder:
• **Blöhbaum, Frank
79112 Freiburg i.Br (DE)**
• **Zierke, Volker
79312 Emmendingen (DE)**

(74) Vertreter: **Modrow, Stephanie et al
Westphal, Mussgnug & Partner
Patentanwälte
Am Riettor 5
D-78048 Villingen-Schwenningen (DE)**

(56) Entgegenhaltungen:
**DE-B3-102006 001 634        US-A1- 2004 105 580
US-B1- 6 341 016**

• **WONG A K C ET AL: "Fast acquisition of dense depth data by a new structured light scheme" COMPUTER VISION AND IMAGE UNDERSTANDING, ACADEMIC PRESS, SAN DIEGO, CA, US, Bd. 98, Nr. 3, Juni 2005 (2005-06), Seiten 398-422, XP004876385 ISSN: 1077-3142**
• **PAGES J ET AL: "Overview of coded light projection techniques for automatic 3D profiling" PROCEEDINGS OF THE 2003 IEEE INTERNATIONAL CONFERENCE ON ROBOTICS AND AUTOMATION. ICRA 2003. TAIPEI, TAWAN, SEPT. 14 - 19, 2003, PROCEEDINGS OF THE IEEE INTERNATIONAL CONFERENCE ON ROBOTICS AND AUTOMATION, NEW YORK, NY : IEEE, US, Bd. VOL. 1 OF 3, 14. September 2003 (2003-09-14), Seiten 133-138, XP010667620 ISBN: 0-7803-7736-2**

EP 2 019 281 B1

**Beschreibung**

Die Erfindung betrifft ein Verfahren zum Betrieb eines 3D-Sensors gemäß dem Oberbegriff des Patentanspruchs 1.

Für die Identifizierung und Vermessung von Objekten, für Sortieraufgaben, für fahrerlose Transportsysteme und für vielfältige weitere Anwendungsbereiche in der Automatisierungs- und Sicherheitstechnik sowie der Logistik besteht ein großer Bedarf an der Nutzung von 3D-Sensoren, d.h. Sensoren, die zur Überwachung eines Volumens im Raum verwendet werden können.

Die Anforderungen an diese Systeme sind vielfältig und umfassen unter anderem die schnelle Erfassung einer Vielzahl von Entfernungsbildpunkten und Sicherstellung der Funktionsweise auch bei Auftreten jeglicher Art von optischer Störstrahlung und/oder optisch kritischen, z.B. glänzenden oder kontrastarmen Objekten.

Für die Realisierung eines optoelektronischen 3D-Sensors sind eine Reihe unterschiedlicher Verfahren bekannt:

Einerseits handelt es sich dabei um Laufzeitbasierte Verfahren bei denen von einer Strahlungsquelle ein modulierter Lichtpuls ausgesendet, an dem Messobjekt reflektiert und detektiert wird, wobei die Laufzeit des Lichtpulses durch Ermittlung der Phasendifferenz des modulierten Lichtes bestimmt wird. Ein Beispiel für ein nach diesem Prinzip arbeitendes System lehrt beispielsweise die DE 44 40 613 C1.

Allerdings erweist sich bei diesem Verfahren als Nachteil, dass der Sensor eine Demodulation des Lichtsignales vornehmen können muss, was einen speziellen Sensorchip, konkret einen Photomischdetektor, notwendig macht. Diese Art von Sensorchips kann jedoch nach heutigem Stand der Technik nur mit maximal 160x120 Pixeln realisiert werden. Darüber hinaus ist ein Problem bei dem Einsatz dieses 3D-Sensors, dass erhebliche Fehlmessungen infolge der Phasenüberlagerung verschieden langer optischer Wege auftreten können, die insbesondere dann relevant werden, wenn Objekte mit stark unterschiedlichem Reflexionsgrad nachzuweisen sind.

Eine alternative Vorgehensweise bei der Realisation eines 3D-Sensors, die z.B. der DE 198 33 207 A1 zu entnehmen ist, sieht vor, dass ein Objekt mit einem oder mehreren sehr kurzen Lichtpulsen beleuchtet wird, was dazu führt, dass Lichtpulse derselben Länge vom Objekt zurückgestreut werden. Die zurückgestreuten Pulse werden über eine Optik auf einen pixelauflösenden, wahlfrei auslesbaren optoelektronischen Sensor geleitet, dessen Integrationszeit pixelweise einstellbar ist, wobei wegen der unterschiedlichen Entfernung zu unterschiedlichen Orten die rückgestreuten Lichtpulse jeweils zu unterschiedlichen Zeiten am Sensor ankommen. Zur Abstandmessung wird ein Zeitfenster geöffnet, das kleiner oder gleich der Länge der ausgesandten Lichtpulse ist. Zeitverzögert eintreffende Lichtpulse werden teilweise hinten abgeschnitten, so dass die unterschiedlichen Abstände unterschiedlicher Punkte des Gegenstandes in unterschiedliche Ladungen in den Pixeln des optoelektronischen Sensors, auf die sie abgebildet werden, umgesetzt werden.

Bei dieser Form von 3D-Sensor ist problematisch, dass er mit typischen Shutter-Zeiten von ca. 30ns bis 100ns arbeitet. Um bei derart kurzen Integrationszeiten die notwendige Signalqualität zu erreichen, ist die Verwendung sehr leistungsstarker Lichtquellen, insbesondere von Laserlichtquellen erforderlich, die einerseits teuer sind, andererseits aber auch im industriellene Einsatz erhebliche Probleme hinsichtlich der Augensicherheit mit sich bringen. Hinzu kommt noch die Tatsache, dass bei diesen Sensoren letztlich die Auswertung eines Amplitudenwertes erfolgt, was dazu führt, dass erzielbare Flankensteilheiten, Pulsverformungen und deren amplitudenabhängige Änderung sowohl hinsichtlich der Beleuchtungspulse als auch hinsichtlich der realen Integrationszeiten des Sensors eine wichtige Rolle spielen. Die Kontrolle dieser Einflussfaktoren und die Einhaltung einer vorgegebenen Serienkonstanz ist kostenintensiv und technisch schwierig.

Aus diesen Gründen ist für industrielle Anwendungen noch immer der Ansatz der Wahl, das Prinzip der Stereoskopie zu verwenden. Dabei werden paarweise Bilder erzeugt, auf denen jeder Raumpunkt durch korrespondierende Bildpunkte abgebildet wird. Aufgrund der Parallaxe sind diese Bilder in geringem Maße zueinander seitenverschoben. Als Konsequenz lässt sich die Tiefenlage eines gegebenen Raumpunktes aus dem Bild reproduzierbar ermitteln.

Der 3D-Sensor liegt also als eine "traditionelle" Stereokamera vor, die die Information zweier unabhängiger optoelektronischer Sensoren so miteinander verrechnet, dass über die Triangulation eine Tiefeninformation den jeweiligen Bildpunkten zugeordnet werden kann. Dazu wird bei einer Stereokamera mit zwei z.B. jeweils aus einem Bildsensor und einer zugeordneten Abbildungsoptik bestehenden Kamerasystemen, deren optische Achsen um eine Grundlänge L voneinander entfernt sind, jeweils ein Bild eines Gegenstandes aufgenommen. In Kenntnis der Brennweite f der Abbildungsoptiken und eines Maßes a+b der Verlagerung des Gegenstands auf den beiden Bildern lässt sich dann die gewünschte Entfernungs- oder Tiefeninformation R über den Ausdruck

$$R = \frac{f \cdot L}{a+b}$$

berechnen. Zur automatisierten Bestimmung dieses Maßes im 3D-Sensor ist es also notwendig, die Verlagerung des Gegenstands in den von den beiden Kameras aufgenommenen Bildern automatisiert zu berechnen. Bildlich gesprochen müssen dazu die beiden Bilder automatisch übereinandergeschoben und diese Verschiebungen bestimmt werden, was in der Praxis beispielsweise durch eine Disparitätsschätzung in Form einer Auswertung einer Korrelationsfunktion zwischen den Bildern für eine Vielzahl von Verschiebungen erreicht werden kann.

Die Präzision, mit der die Berechnung der Verlagerung gelingt, hängt entscheidend vom Kontrast des Gegenstandes selbst und dem Kontrast des Gegenstandes gegenüber dem Hintergrund ab. Bekannte Vorschläge zur Weiterentwicklung dieser Systeme, wie sie beispielsweise der DE 44 44 593 C2 zu entnehmen sind, stellen daher darauf ab, durch eine geschickte Bildung und Betrachtung von ausgewählten Bildausschnitten zu einer Stärkung des Kontrastes zu gelangen, etwa dadurch, dass kontrastreiche, aber nicht zum Objekt sondern zum Hintergrund gehörende Bildbereiche ausgeblendet werden. Im Fall fehlender Bildkontraste kann diese Vorgehensweise aber das Versagen des 3D-Sensors ebenfalls nicht verhindern.

Problem bei der technisch robusten und mit im Vergleich zu den vorstehend diskutierten Lösungsansätzen geringem finanziellen und technischen Aufwand umsetzbaren Lösung des Einsatzes einer Stereokamera ist somit, dass kontrastarme Bilder zu Fehlmessungen und einem Totalausfall des Systems führen können. Dies ist gerade für sicherheitsrelevante Überwachungssysteme aber keinesfalls akzeptabel.

Aus der DE 10 2006 001 643 B3 ist eine Stereokamera mit eine Projektionseinheit, die pseudozufällige Muster erzeugt, bekannt, mit der bei der Herstellung der Korrespondenz der Punkte eine Szene zweimal, davon mindestens einmal mit einem Zufalls- oder Pseudozufallsmuster beleuchtet wird.

Aus der US 6 341 016 B1 ist ein Verfahren zur Bestimmung der dreidimensionalen Struktur eines Objekts unter Verwendung der Projektion von strukturiertem Licht auf ein Objekt unter Verwendung einer Stereokamera bekannt.

In dem Artikel von J. Pages et al. "Overview of coded light projection techniques for automatic 3D profiling"; Proceedings of the 2003 IEEE international conference on Robotics & Automation, 133-188 werden verschiedene Techniken zur Verwendung codierter Lichtprojektion zum Erhalten von Tiefendaten beschrieben.

Die Aufgabe der Erfindung besteht darin, ein Verfahren zum Betrieb eines solchen 3D-Sensors bereitzustellen.

Diese Aufgabe wird gelöst durch ein Verfahren zum Betrieb eines 3D-Sensors mit den Merkmalen des Anspruchs 1. Vorteilhafte Ausführungen und Weiterbildungen der Erfindung sind in den jeweils rückbezogenen Unteransprüchen angegeben.

Der Erfindung liegt die Erkenntnis zugrunde, dass der für die Verwendung des Stereokamera-Prinzips für einen 3D-Sensor notwendige Kontrast dem Objekt dadurch aufgeprägt werden kann, dass es mit einem in zwei Dimensionen ortsabhängigen, nichtperiodischen Lichtmuster beleuchtet wird. Dazu ist ergänzend anzumerken, dass ein Linienmuster dies nicht erfüllt, da dieses nur in einer Dimension ortsabhängig ist.

Ein mit dem erfindungsgemäßen Verfahren ansteuerbarer 3D-Sensor umfasst eine erste Kamera und eine zweite Kamera, die so zueinander ausgerichtet sind, dass ihre Raumwinkelbereiche sich überlappen, mindestens eine Beleuchtungseinheit zur Beleuchtung zumindest des Überlappungsbereiches der Raumwinkelbereiche und eine Steuer- und Auswerteeinheit, wobei mindestens eine Beleuchtungseinheit Mittel zur Erzeugung eines zweidimensionalen Beleuchtungsmusters, das zumindest in Teilbereichen die Eigenschaften inhomogen, aperiodisch und selbstunähnlich aufweist, umfassen. Durch die inhomogene Beleuchtung wird ein Bildkontrast, den der Gegenstand selbst gegebenenfalls nicht aufweist, erzeugt. Der so erzeugte Bildkontrast kann dann verwendet werden, um die Verlagerung des Gegenstandes auf den beiden von den Kameras aufgenommenen Bildern zu bestimmen und so die Information in der dritten Dimension zu gewinnen. Mit einem Beleuchtungsmuster, das nicht wenigstens in einem Teilbereich aperiodisch und selbstunähnlich ist, wäre diese Verlagerung nicht eindeutig zu bestimmen, wie sich leicht am Beispiel eines Schachbrettmusters erschließt: Liegen ein weißes Feld des ersten Bildes und ein schwarzes Feld des zweiten Bildes zunächst übereinander, können die Bilder durch eine Verschiebung um ein Feld in waagerechter Richtung oder durch ein Verschiebung um ein Feld in senkrechter Richtung oder durch eine Vielzahl von Linearkombination dieser Verschiebungen in Übereinstimmung gebracht werden. Um solche Mehrdeutigkeiten zu vermeiden, muss es mindestens einen Teilbereich des inhomogenen Beleuchtungsmusters geben, der aperiodisch und selbstunähnlich ist.

Besonders vorteilhaft für praktische Zwecke ist es, wenn das zweidimensionale Beleuchtungsmuster in Beleuchtungspixel aufgeteilt ist, da durch eine solche Diskretisierung die Definition und Ansteuerung des Beleuchtungsmusters erheblich vereinfacht wird.

Diese Diskretisierung wird vorteilhafterweise auch hinsichtlich der Beleuchtungsintensität vorgenommen, indem die Mittel zur Erzeugung des zweidimensionalen Beleuchtungsmusters geeignet sind, um den Beleuchtungspixeln jeweils einen von n möglichen Helligkeitswerten zuzuordnen.

Die Zuweisung eines solchen Helligkeitswertes kann sehr einfach dadurch erfolgen, dass die Beleuchtungseinheit und/oder die Steuer- und Auswerteeinheit Mittel zur Zuweisung des Helligkeitswertes für jeden Beleuchtungspixel durch Berechnung von Pseudo-Random-Zufallszahlen umfasst oder umfassen. Die Verwendung von zufallsgenerierten Helligkeitswerten für die einzelnen Pixel stellt automatisch sicher, dass das Beleuchtungsmuster die notwendigen Bedingung der Inhomogenität, Aperiodizität und Selbstunähnlichkeit zumindest in Teilbereichen aufweist.

Besonders vorteilhaft ist es, wenn das Beleuchtungsmuster über der ganzen Beleuchtungsfläche die Eigenschaften inhomogenen, aperiodisch und selbstunähnlich aufweist, da dies die Eindeutigkeit der Zuordnung verbessert und den Einfluss zufallsbedingter Effekte, die nicht durch die Beleuchtungseinheit hervorgerufen werden, sondern beispielsweise durch Rauscheffekte, reduziert.

Besonders vorteilhaft zur Erreichung einer eindeutigen Zuordnung zwischen den von den beiden Kameras aufgenommenen Bildern ist es, wenn das Beleuchtungsmuster eine derartige Selbstunähnlichkeit aufweist, dass eine 2D-Korrelation dieser Struktur mit sich selbst nur ein signifikantes Korrelationsmaximum liefert.

Einen 3D-Sensor mit einer preislich besonders günstigen und leicht ansteuerbaren Beleuchtungseinheit ohne signifikante zusätzliche thermische Belastung erhält man, wenn man als Lichtquelle eine LED oder ein LED-Array verwendet. Leistungsstärkere Beleuchtungseinheiten für den 3D-Sensor können vorteilhafterweise eine Halogen- oder Plasmalampe aufweisen. Falls die Anwendung des 3D-Sensors in einer Umgebung erfolgt, in der zusätzliche Lichteinträge im sichtbaren Wellenlängenbereich störend wirken, kann die Beleuchtungseinheit auch als Infrarot-Lichtquelle ausgestaltet sein.

Bei diesen drei Ausführungsformen des 3D-Sensors kann auf preisgünstige und einfache Weise die für die Erzeugung eines Beleuchtungsmusters notwendige Strukturierung durch Verwendung eines Dias oder einer geätzten Folie oder eines beschichteten oder bedruckten Trägermaterials wie z.B. Glas in der Beleuchtungseinheit erreicht werden.

Eine andere vorteilhafte Lichtquelle für die Beleuchtungseinheit ist ein Laser, eine Laserdiode oder ein Laserdiodenarray. Diese vereinigen die Vorteile hoher Lichtleistung und eines sehr definierten Abstrahlverhaltens in sich. Außerdem stellen sie kohärentes Licht zur Verfügung, wodurch es möglich wird, zur Strukturierung der Beleuchtung diffraktive optische Elemente (DOE) zu verwenden, die eine sehr hohe Auflösung und Lichtstärke ermöglichen. Diese können in einer besonders vorteilhaften Ausführungsform programmierbar ausgeführt sein, z.B. als "Spatial Light Modulator" (SLM), wodurch die Strukturierung des beleuchtenden Lichtes an die variierende Umgebungsbedingungen leicht angepasst werden kann. Eine besonders preisgünstige Ausführungsform diffraktiver optischer Elemente sind solche, die spritzgegossen oder gepresst sind.

Um die Beleuchtung des Gegenstandes anpassen zu können, etwa für unterschiedlich große Gegenstände oder für unterschiedliche Bereiche des auszuwertenden Raumes ist es vorteilhaft, wenn die Beleuchtungseinheit eine Abbildungsoptik aufweist.

Für den 3D-Sensor werden die erste Kamera und die zweite Kamera vorteilhafterweise als gleichartige Matrixkameras ausgeführt. Matrixkamera bedeutet dabei, dass die Kamera zumindest ein Bildregistrierungselement und ein angepasstes Objektiv umfasst und dass das Bildregistrierungselement eine Matrix-Struktur aufweist, wie es beispielsweise bei einem matrixförmiger CMOS-Chip der Fall ist.

Vorteilhafte Ausführungsformen der Bildregistriereinrichtungen der ersten Kamera und der zweiten Kamera weisen Zeilensensoren oder Doppelzeilensensoren auf. Die Pixel der Bildregistriereinrichtungen können je nach Anwendung optimiert quadratisch, rechteckig, hexagonal oder achteckig ausgeführt sein. Es kann auch sinnvoll sein, die Pixelgröße innerhalb der jeweiligen Bildregistriereinrichtungen zu variieren, insbesondere einer vorgegebenen Funktion folgend, z.B. in einer quadratischen oder logarithmischen Abhängigkeit von der Position des Pixels.

Je nach der konkreten Anwendung, für die der 3D-Sensor vorgesehen ist, kann es günstig sein, wenn die erste Kamera und/oder die zweite Kamera und/oder die eine oder mehreren Beleuchtungseinheiten und/oder die Steuer- und Auswerteeinheit in verschiedenen Gehäusen angeordnet sind.

Schliesslich ist es möglich, die Bildregistriereinrichtungen der ersten Kamera und der zweiten Kamera auf demselben Sensorchip anzuordnen. Insbesondere wenn die Distanz zwischen dem 3D-Sensor und dem Objekt gering ist ist diese Anordnung vorteilhaft.

Das erfindungsgemäße Verfahren zum Betrieb eines 3D-Sensors umfasst die Schritte Beleuchten eines Gegenstands mit einer oder mehreren Beleuchtungseinheiten, Aufnehmen eines ersten Bildes des beleuchteten Gegenstands mit einer ersten Kamera und eines zweiten Bildes des beleuchteten Gegenstands mit einer zweiten Kamera, wobei die erste Kamera und die zweite Kamera so ausgerichtet sind, dass ihre Raumwinkelbereiche sich in einem Überlappungsbereich überlappen, der beim Beleuchten des Gegenstands ausgeleuchtet wird, und Bestimmen von Tiefeninformation durch mittels einer Steuer- und Auswerteeinheit ausgeführte Triangulation des ersten und des zweiten Bildes, wobei das Licht zum Beleuchten des Gegenstands durch die eine oder mehrere Beleuchtungseinheiten in ein zweidimensionales Beleuchtungsmuster strukturiert wird, das zumindest in Teilbereichen die Eigenschaften inhomogen, aperiodisch und selbstunähnlich aufweist. Durch die dem Gegenstand durch die für unterschiedliche Punkte des Gegenstandes unterschiedliche Beleuchtung aufgeprägten Bildkontraste wird es auch für Gegenstände, die wenig oder keinen Kontrast aufweisen, so dass konventionelle stereoskopische Kameras versagen, möglich, zuverlässig ein automatisiertes Triangulationsverfahren anzuwenden.

Dabei werden insbesondere Paare von Bildaufnahmen mit einem ersten Beleuchtungsmuster und/oder einem zweiten Beleuchtungsmuster gleichzeitig oder nacheinander durchzuführen und beide Bildpaare ausgewertet. Diese Vorgehensweise bringt wesentliche Vorteile mit sich, wenn in der Bildszene Reflexionen und Glanzeffekte auftreten. Das erste Beleuchtungsmuster kann beispielsweise neben dem zweiten Beleuchtungsmuster oder unter einem anderen Winkel als das zweite Beleuchtungsmuster eingestrahlt werden.

Besonders bevorzugt ist ein Verfahren zum Betrieb eines 3D-Sensor, bei dem vor dem Schritt des Beleuchtens eines Gegenstands mit einer Beleuchtungseinheit ein Optimierungsprozess zur Optimierung des Beleuchtungsmusters durchgeführt wird. Als besonders geeignet hat sich dabei ein Optimierungsprozess erwiesen, bei dem zumindest die folgenden Schritte durchgeführt werden: Aufnahme eines Bildes, insbesondere eines Grauwertbildes des Gegenstandes ohne Beleuchtung, Bestimmung des Kontrastes und/oder der Ortsfrequenzen des Kontrastes des Bildes als Kontrastdatensatz, Vergleich des aus dem Bild gewonnenen Kontrastdatensatzes mit einem vorgegebenen optimalen Kontrastdatensatz, der für unterschiedliche Setups des 3D-Sensors unterschiedlich ist, und Bestimmung eines Beleuchtungsmusters, dessen Struktur gefiltert mit den realen Gegenstandseigenschaften den optimalen Kontrastdatensatz liefert.

Das Setup des 3D-Sensors umfasst die minimale und die maximale Entfernung eines Objekts vom Sensor, die er bestimmen kann, den Raumwinkel der Kameras und den durch die Beleuchtungseinheit ausgeleuchteten Bereich und die geforderte Auflösung und Genauigkeit. Für jedes solche Setup gibt es eine optimale Kontrastverteilung und/oder optimale Ortsfrequenzen des Kontrastes, die ein bestmögliches Messergebnis mit sich bringt oder bringen. Diese optimale Kontrastverteilung ist unabhängig vom Gegenstand. Sie ist vorab bestimmbar und wird gespeichert bereitgestellt.

Man kann sich die reale Kontrastverteilung des Bildes eines Gegenstandes mit Beleuchtung als aus zwei Komponenten zusammengesetzt vorstellen: Einerseits weist ein gegebener Gegenstand in einer gegebenen Szenerie immer eine gewisse Kontrastverteilung und gewisse Ortsfrequenzen des Kontrastes auf. Durch Aufnahme eines Bildes des Gegenstandes ohne Beleuchtung wird dieser Kontrastdatensatz bestimmt. Andererseits gibt es Kontrastbeiträge, die erst durch die strukturierte Beleuchtung hervorgerufen werden.

Dementsprechend kann man durch Vergleich des optimalen Kontrastdatensatzes mit dem Kontrastdatensatz des Gegenstands ohne Beleuchtung den Kontrastdatensatz der Beleuchtung und damit die optimale Beleuchtungsstruktur bestimmen und durch Verwendung dieser Beleuchtungsstruktur im weiteren Verfahren eine optimale Funktionsweise des 3D-Sensors sicherstellen.

Vorteilhaft ist insbesondere für die Verwendung in sicherheitsrelevanten Applikationen ein Verfahren zum Betrieb eines 3D-Sensors, bei dem beim Einschalten und/oder während des Betriebes zusätzlich ein Selbsttest-Prozess des 3D-Sensors durchgeführt wird, durch den die sichere Funktion des 3D-Sensors ständig überwacht wird. Dieser Prozess umfasst die folgenden Schritte: Aufnahme eines Bildes, insbesondere eines Grauwertbildes des Gegenstands ohne Beleuchtung und eines Bildes des Gegenstands mit strukturierter Beleuchtung, Subtraktion des Bildes des Gegenstands von dem Bild des Gegenstands mit strukturierter Beleuchtung, Vergleich des verwendeten Beleuchtungsmusters mit einem im vorstehend beschriebenen Schritt des Selbsttest-Prozesses erhaltenen Differenzbild und Ausgabe einer Fehlermeldung, wenn der Vergleich zwischen dem verwendeten Beleuchtungsmuster und dem Differenzbild keine Identität beider Bilder ergibt. Der Vorteil dieser Vorgehensweise liegt darin, dass dieses Testverfahren sowohl den optischen Zweig als auch den Auswertezweig des 3D-Sensors überwacht, so dass eine Funktionsstörung sicher nachgewiesen wird, was für sicherheitsrelevante Applikationen zwingend erforderlich ist.

Das erfindungsgemäße Verfahren ist insbesondere gut für sicherheitstechnische Anwendungen geeignet. Dabei überwacht der Sensor einen Gefahrenbereich, der eine Gefahrenquelle bei Erkennen eines sicherheitskritischen Objekts oder sicherheitskritischen Eingriffs absichert, z.B. eine Presse, Stanzmaschine oder Schneidemaschine, von der Gefahr für das Bedienpersonal ausgeht, da Körperteile gequetscht oder abgetrennt werden können, abschaltet.

Solche Sicherheitssensoren und/oder die mit ihnen verbundenen Auswerte- und/oder Steuereinheiten sind als sichere Sensoren im Sinne von Maschinensicherheit ausgebildet. Sie sollen beispielsweise den Normen EN 954 und/oder EN 61508 genügen und insbesondere eigene Fehler selbständig erkennen.

Im Folgenden wird eine Ausführungsform der Erfindung anhand der beigefügten Zeichnungen näher erläutert.

Es zeigt

Fig. 1:      einen 3D-Sensor

Fig. 2:      ein beispielhaftes Beleuchtungsmuster

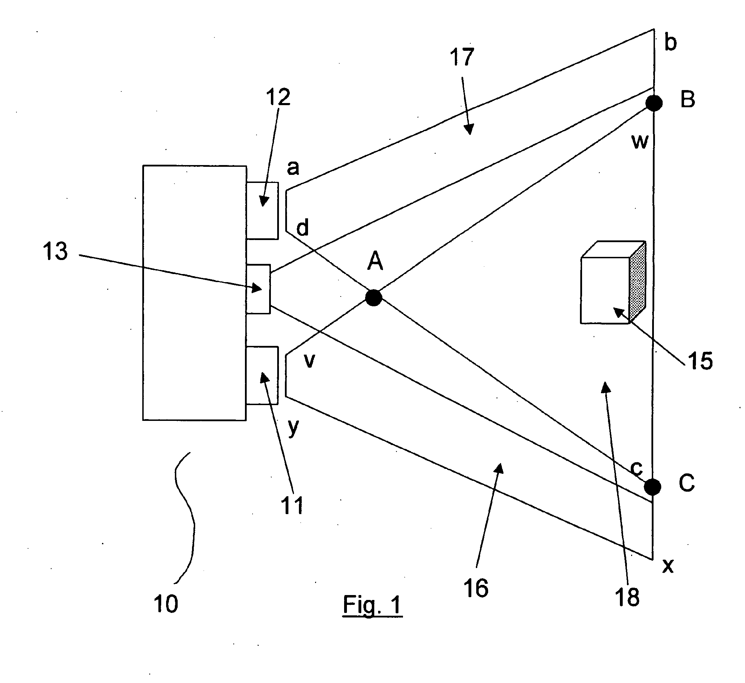

Figur 1 zeigt einen 3D-Sensor 10 umfassend eine erste Kamera 11, eine zweite Kamera 12, eine Beleuchtungseinheit 13 und eine Steuer- und Auswerteeinheit 14. Die erste Kamera 11 nimmt Bilder aus einem Raumwinkelbereich, der, da eine reale Kamera nur eine begrenzte Reichweite hat, durch die Eckpunkte a, b, c, d definiert wird auf und die zweite Kamera 12 nimmt Bilder aus einem Raumwinkelbereich auf, der durch die Eckpunkte v, w, x, y definiert ist. Die Kameras 11, 12 sind derart zueinander ausgerichtet, dass die ihnen zugeordneten Raumwinkelbereiche a, b, c, d bzw. v, w, x, y sich im durch die Eckpunkte A, B, C definierten Überlappungsbereich überlappen. Wenn im folgenden von den Raumwinkelbereichen a, b, c, d; v, w, x, y oder vom Überlappungsbereich A, B, C die Rede ist, ist stets der durch die enstprechenden Eckpunkte definierte Bereich gemeint.

In der hier dargestellten Ausführungsform sind die Komponenten erste Kamera 11, die zweite Kamera 12, die Beleuchtungseinheit 13 und die Steuer- und Auswerteeinheit 14 in einem Gerät zusammengefasst. Es ist aber problemlos möglich, die jeweils einzelnen Komponenten räumlich getrennt voneinander auszuführen, solange eine Verbindung, beispielsweise ein Bus-System zur Kommunikation und zum Datentransfer zwischen den Komponenten sowie zur Ansteuerung der Komponenten vorgesehen ist. Wesentlich ist aber, dass die Raumwinkelbereiche a, b, c, d der ersten Kamera 11 und v, w, x, y der zweiten Kamera 2 einander überlappen und die Beleuchtungseinheit 13 so ausgerichtet ist, dass ein an einer beliebigen Stelle im Überlappungsbereich A, B, C angeordneter Gegenstand 15 von ihr beleuchtet wird. Die Kameras 11, 12 umfassen jeweils eine Bildregistriereinrichtung, beispielsweise einen Matrix-Chip, und ein an die jeweilige Anwendung angepasstes Objektiv.

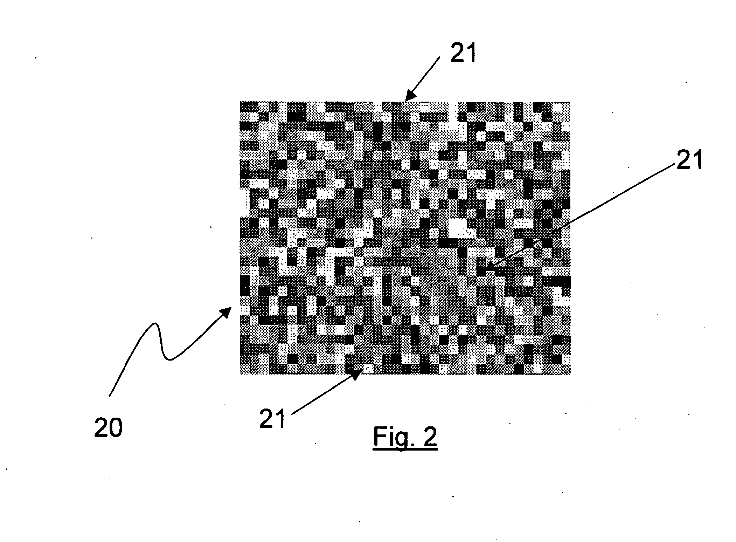

Figur 2 zeigt ein Beispiel für ein Beleuchtungsmuster 20. Ein wesentliches Merkmal des Beleuchtungsmusters 20 ist, dass es als zweidimensionale räumliche Anordnung von Beleuchtungspixeln 21 wiedergegeben werden kann, denen jeweils eine Helligkeitsstufe, bildlich wiedergegeben durch eine unterschiedliche Grausschattierung der Beleuchtungspixel 21, zugeordnet ist. Aus Gründen der Übersichtlichkeit sind nur drei der Beleuchtungspixel 21 in Figur 2 mit einem Bezugszeichen versehen.

Das Beleuchtungsmuster 20 zeigt insbesondere keine periodische Struktur und kein Linienmuster, sondern ist selbstunähnlich. Diese Ausgestaltung ist wesentlich, um die notwendige Eindeutigkeit der Zuordnung der mit dieser Struktur in der ersten Kamera 11 bzw. zweiten Kamera 12 registrierten Bilder des Gegenstands 15 zueinander zu gewährleisten, wenn es sich um einen kontrastarmen, strukturlosen Gegenstand 15 handelt. Würde beispielsweise ein Linienmuster verwendet, würde eine Korrelation der registrierten Bilder zueinander in der Richtung längs der Linien kein signifikantes Korrelationsmaximum liefern.

Bezugszeichenliste

| 10 | 3D-Sensor |
| 11 | erste Kamera |
| 12 | zweite Kamera |
| 13 | Beleuchtungseinheit |
| 14 | Steuer- und Auswerteeinheit |
| 15 | Gegenstand |
| 20 | zweidimensionales Beleuchtungsmuster |
| 21 | Beleuchtungspixel |

| a,b,c,d | Eckpunkte des Raumwinkelbereichs der ersten Kamera |
| v,w,x,y | Eckpunkte des Raumwinkelbereichs der ersten Kamera |

| A,B,C | Eckpunkte des Überlappungsbereichs der Raumwinkelbereiche der ersten und zweiten Kamera |

**Patentansprüche**

1.  Verfahren zum Betrieb eines 3D-Sensors (10), umfassend die Schritte

- Beleuchten eines Gegenstands (15) mit mindestens einer Beleuchtungseinheit (13),
- Aufnehmen eines ersten Bildes des beleuchteten Gegenstands (15) mit einer ersten Kamera (11) und eines zweiten Bildes des beleuchteten Gegenstands (15) mit einer zweiten Kamera (12), wobei die erste Kamera (11) und die zweite Kamera (12) so ausgerichtet sind, dass ihre Raumwinkelbereiche (a, b, c, d; v, w, x, y) sich in einem Überlappungsbereich (A, B, C) überlappen, der beim Beleuchten des Gegenstands (15) ausgeleuchtet wird,
- Bestimmen von Tiefeninformation durch mittels einer Steuer- und Auswerteeinheit (14) ausgeführte Triangulation

wobei das Licht zum Beleuchten des Gegenstands (15) durch die mindestens eine Beleuchtungseinheit (13) in ein zweidimensionales Beleuchtungsmuster (20) oder mehrere zweidimensionale Beleuchtungsmuster (20) strukturiert wird, das oder die zumindest in Teilbereichen die Eigenschaften inhomogenen, aperiodisch und selbstunähnlich aufweist oder aufweisen,

wobei ferner Paare von Bildaufnahmen mit einem ersten Beleuchtungsmuster (20) und/oder einem zweiten Beleuchtungsmuster (20) gleichzeitig oder nacheinander aufgenommen und beide Bildpaare ausgewertet werden und

vor dem Schritt des Beleuchtens des Gegenstands (15) mit der Beleuchtungseinheit (13) ein Optimierungsprozess zur Optimierung des Beleuchtungsmusters durchgeführt wird,

**dadurch gekennzeichnet, dass** der Optimierungsprozess zur Optimierung des Beleuchtungsmusters die folgenden Schritte umfasst:

- Aufnahme eines Bildes des Gegenstandes (15) ohne Beleuchtung,
- Bestimmung der Kontrastverteilung und/oder der Ortsfrequenzen des Kontrastes des Bildes ohne Beleuchtung als Kontrastdatensatz,
- Vergleich des aus dem Bild ohne Beleuchtung gewonnenen Kontrastdatensatzes mit einem vorgegebenen optimalen Kontrastdatensatz, der für unterschiedliche Setups des 3D-Sensors unterschiedlich ist,
- Bestimmung eines Beleuchtungsmusters, dessen Struktur gefiltert mit den realen Eigenschaften des Gegenstands den optimalen Kontrastdatensatz liefert.

**2.** Verfahren zum Betrieb eines 3D-Sensors (10) nach Anspruch 1,
**dadurch gekennzeichnet, dass** beim Einschalten und/oder während des Betriebes ein Selbsttest-Prozess des 3D-Sensors durchgeführt wird, der die folgenden Schritte umfasst:

- Aufnahme eines Bildes des Gegenstands (15) ohne Beleuchtung und eines Bildes des Gegenstands (15) mit strukturierter Beleuchtung
- Subtraktion des Bildes des Gegenstandes (15) eine Beleuchtung von dem Bild des Gegenstands mit strukturierter Beleuchtung
- Vergleich des verwendeten Beleuchtungsmusters mit dem im vorstehend beschriebenen Schritt erhaltenen Differenzbild
- Ausgabe einer Fehlermeldung, wenn der Vergleich zwischen dem verwendeten Beleuchtungsmuster und dem Differenzbild keine Identität beider Bilder ergibt.

## Claims

**1.** A method for the operation of a 3D sensor (10), comprising the following steps:

- illuminating an object (15) by at least one illumination unit (13),
- recording a first image of the illuminated object (15) by a first camera (11) and a second image of the illuminated object (15) by a second camera (12), the first camera (11) and the second camera (12) being oriented so that their solid angle regions (a, b, c, d; v, w, x, y) overlap in an overlapping region (A, B, C) that is illuminated when the object (15) is illuminated,
- determining depth information by triangulation performed by means of a control and evaluation unit (14), whereby the light for illuminating the object (15) by the at least one illumination unit (13) is structured into a two-dimensional illumination pattern (20) or several two-dimensional illumination patterns (20), which comprises or comprise the properties inhomogeneous, aperiodic and non-self-similar, at least in sub-regions,
whereby, in addition, pairs of image recordings with a first illumination pattern (20) and/or a second illumination pattern (20) are recorded simultaneously or consecutively and both image pairs are evaluated and prior to the step of illuminating the object (15) by the illumination unit (13) an optimisation process is performed to optimise the illumination pattern,

**characterised in that** the optimisation process for optimising the illumination pattern comprises the following steps:

- recording an image of the object (15) without illumination,
- determining the contrast distribution and/or the spatial frequencies of the contrast of the image without illumination as a contrast data record,
- comparing the contrast data record obtained from the image without illumination with a predetermined optimal contrast data record that is different for different setups of the 3D sensor,
- determining an illumination pattern, the structure of which, filtered with the real properties of the object, provides the optimal contrast data record.

**2.** A method for the operation of a 3D sensor (10) according to Claim 1,
**characterised in that** upon switching on and/or during operation there is performed a self-testing process of the 3D sensor, which comprises the following steps:

- recording an image of the object (15) without illumination and of an image of the object (15) with structured illumination,
- subtracting the image of the object (15) without illumination from the image of the object with structured illumination,
- comparing the used illumination pattern with the difference image obtained in the above-described step,
- output of an error message when the comparison between the used illumination pattern and the difference image does not detect two identical images.

## Revendications

**1.** Procédé de commande d'un capteur 3D (capteur en trois dimensions) (10) comprenant les étapes suivantes :

- éclairage d'un objet (15) à l'aide d'au moins une unité d'éclairage (13),
- prise de vue d'une première image de l'objet éclairé (15) à l'aide d'une première caméra (11) et d'une seconde image de l'objet éclairé (15) à l'aide d'une seconde caméra (12), la première caméra (11) et la seconde caméra (12) étant alignées pour que les plages de leurs angles solides (a, b, c, d; v, w, x, y) se chevauchent dans une zone de chevauchement (A, B,C), éclairée par l'éclairage de l'objet (15),
- on détermine une information de profondeur par une triangulation exécutée à l'aide d'une unité de commande et d'exploitation (14),

- la lumière éclairant l'objet (15) étant structurée par au moins une unité d'éclairage (13) selon un second motif d'éclairage (20), bidimensionnel ou plusieurs motifs d'éclairage (20) bidimensionnels, qui présentent au moins dans des zones partielles, des propriétés non homogènes, apériodiques et autodifférentes, et

- en outre, on prend des paires de vues avec un premier motif d'éclairage (20) et/ou un second motif d'éclairage (20), de façon simultanée ou successive, on exploite les deux paires d'images, et avant l'étape d'éclairage de l'objet (15) par l'unité d'éclairage (13), on effectue un procédé d'optimisation du motif d'éclairage,

**caractérisé en ce que**
le procédé d'optimisation du motif d'éclairage comprend les étapes suivantes :

- prise de vue d'une image de l'objet (15) sans éclairage,
- détermination de la répartition du contraste et/ou des fréquences locales du contraste de l'image sans éclairage comme un jeu de données de contraste,
- comparaison du jeu de données de contraste obtenu à partir de l'image sans éclairage avec un jeu de données de contraste, optimum, prédéfini, qui est différent pour différents réglages du capteur 3D,
- détermination d'un motif d'éclairage dont la structure est filtrée avec les propriétés réelles de l'objet fournissant le jeu de données de contraste, optimum.

2. Procédé de commande d'un capteur 3D (10) selon la revendication 1,
   **caractérisé en ce que** lors du branchement et/ou pendant le fonctionnement, on exécute un procédé de test automatique du capteur 3D qui comprend les étapes suivantes :

   - prise de vue d'une image de l'objet (15) sans éclairage et d'une image de l'objet (15) avec un éclairage structuré,
   - soustraction de l'image de l'objet (15) sans éclairage et de l'image de l'objet avec un éclairage structuré,
   - comparaison du motif d'éclairage utilisé avec la différence des images selon l'étape décrite ci-dessus, et
   - émission d'un signal de défaut si la comparaison entre le motif d'éclairage utilisé et la différence des images ne donne aucune identité entre les deux images.

Fig. 1

EP 2 019 281 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4440613 C1
- DE 19833207 A1
- DE 4444593 C2
- DE 102006001643 B3
- US 6341016 B1

**In der Beschreibung aufgeführte Nicht-Patentliteratur**

- **J. Pages et al.** Overview of coded light projection techniques for automatic 3D profiling. *Proceedings of the 2003 IEEE international conference on Robotics & Automation,* 2003, 133-188